# EUROPÄISCHE PATENTANMELDUNG

(11) **EP 4 414 670 A1**
(43) Veröffentlichungstag der Anmeldung: **14.08.2024**
(21) Anmeldenummer: 24155417.9
(22) Anmeldetag: 02.02.2024
(51) Int. Cl.: G01J 3/02, G01J 3/12, G01J 3/14, G01J 3/28, G02B 21/00, G02B 21/36, G01J 3/50

(54) **DETEKTIONSVORRICHTUNG UND VERFAHREN ZUR DETEKTION VON LICHT IN EINEM WELLENLÄNGENBEREICH UND LICHTMIKROSKOP MIT EINER DETEKTIONSVORRICHTUNG**

(30) Priorität: 03.02.2023 DE 102023102735
(71) Anmelder: Abberior Instruments GmbH, 37077 Göttingen (DE)
(72) Erfinder: DONNERT, Gerald, 37083 Göttingen (DE); REUSS, Matthias, 37083 Göttingen (DE)

(57) **Zusammenfassung**

Die Erfindung bezieht sich auf eine Detektionsvorrichtung (1) und ein Verfahren zur Detektion von Licht, das mehrere Wellenlängenkomponenten in einem Wellenlängenbereich umfasst. Die Detektionsvorrichtung und das Verfahren weisen eine über den Wellenlängenbereich optimierte Detektionsempfindlichkeit auf und ermöglichen optional eine spektral aufgelöste Detektion des Lichts.

## Beschreibung

### Technisches Gebiet der Erfindung

Die Erfindung bezieht sich auf eine Detektionsvorrichtung und ein Verfahren zur Detektion von Licht, das mehrere Wellenlängenkomponenten in einem Wellenlängenbereich umfasst. Die Detektionsvorrichtung und das Verfahren weisen eine über den Wellenlängenbereich optimierte Detektionsempfindlichkeit auf und ermöglichen optional auch eine spektral aufgelöste Detektion des Lichts. Die Detektionsvorrichtung und das Verfahren zeichnen sich dadurch aus, dass das einfallende Licht räumlich aufgespalten und mit einem mehrere Detektorelemente umfassenden Detektor erfasst wird, wobei die Detektorelemente spektral unterschiedliche Empfindlichkeitskurven aufweisen.

Die Erfindung bezieht sich weiter auf ein Lichtmikroskop, insbesondere ein Fluoreszenzmikroskop, mit einer entsprechenden Detektionsvorrichtung, das bei der Verwendung mit unterschiedlichen Fluoreszenzfarbstoffen eine optimierte Detektionseffizienz aufweist.

### Stand der Technik

Zur Detektion von Licht in technischen Anwendungen stehen eine Vielzahl von teils hochempfindlichen Detektortypen zur Verfügung, deren Funktionsweise sich auf das Prinzip eines Fotomultipliers oder einer Fotodiode zurückführen lässt.

Die Detektion einfallenden Lichts wird beim Fotomultiplier durch das Auftreffen auf die Fotokathode eingeleitet, aus deren Oberfläche beim Auftreffen der Photonen Fotoelektronen herausgeschlagen werden (äußerer fotoelektrischer Effekt). Dabei müssen die einfallenden Photonen jeweils mindestens die (materialspezifische) Austrittsarbeit des Fotokathodenmaterials aufbringen und können daher nur detektiert werden, wenn ihre Wellenlänge unterhalb einer durch das Fotokathodenmaterial vorgegebenen Grenzwellenlänge liegt. Die primären Fotoelektronen werden in einem nachfolgenden Verstärkungsbereich im elektrischen Feld zwischen aufeinanderfolgenden Elektroden (Dynoden) beschleunigt und schlagen aus diesen beim Auftreffen jeweils mehrere Sekundärelektronen heraus, so dass die Anzahl der Elektronen von Dynode zu Dynode exponentiell zunimmt und ausgangsseitig ein Strom detektiert werden kann. Die Verstärkung kann dabei so hoch sein, so dass auch einzelne einfallende Photonen einen detektierbaren Stromstoß erzeugen.

Bei Halbleiter-Fotodioden werden durch Absorption einfallender Photonen in einer Absorptionszone Ladungsträger in Form von Elektron-Loch-Paaren erzeugt (innerer fotoelektrischer Effekt), sofern die Energie der einfallenden Photonen mindestens der Bandlücke des Halbleiters entspricht. Einfallende Photonen können daher nur detektiert werden, wenn ihre Wellenlänge unterhalb einer durch das Halbleitermaterial vorgegebenen Grenzwellenlänge liegt.

Die primär erzeugten Ladungsträger driften in der Raumladungszone eines *pn-* oder *pin-*Übergangs entgegen der Diffusionsspannung in die gleichartig dotierten Zonen und verursachen so einen Driftstrom. Sind die Anschlüsse der Fotodiode miteinander elektrisch verbunden, oder wird in Sperrrichtung der Fotodiode eine externe Spannung angelegt, fließt ein zur Menge des einfallenden Lichts proportionaler Fotostrom. Analog zum Fotomultiplier können Fotodioden zusätzlich eine *Multiplikationszone* aufweisen, in der die Fotoelektronen in einem externen elektrischen Feld beschleunigt werden und durch Stoßionisation Sekundärladungsträger erzeugen, die ihrerseits im elektrischen Feld beschleunigt werden und weitere Ladungsträger erzeugen. Derartige *Lawinenfotodioden* oder *Avalanche-Fotodioden* (engl. *avalanche photodiode,* APD) werden mit Sperrspannungen nahe der Durchbruchspannung betrieben und erreichen eine Verstärkung im Bereich von 100 bis 500. Oberhalb der Durchbruchspannung kommt es zum lawinenartigen Fortschreiten der Ladungsträgervervielfachung (Lawinendurchbruch), was zu einem kurzzeitigen Verstärkungsfaktor von einigen Millionen führt. In diesem sog. *Geiger-Modus* kann eine Lawine bereits durch ein einzelnes absorbiertes Photon ausgelöst werden, so dass eine Einzelphotonendetektion möglich ist. Allerdings muss eine Lawine gelöscht werden, bevor das nächste Photon detektiert werden kann, wozu der Fachmann auf im Stand der Technik etablierte Löschungsschaltungen zurückgreifen kann.

Die Merkmale von Fotomultipliern und Avalanche-Fotodioden können zu sog. *Hybriddetektoren* kombiniert werden, in denen Fotoelektronen durch Herausschlagen aus einer Fotokathode erzeugt und in einem elektrischen Feld beschleunigt werden. Die beschleunigten Fotoelektronen treffen dann auf eine Avalanche-Fotodiode, in der eine im wesentlichen zweistufige Elektronenvervielfachung erfolgt. Da die erste dieser Verstärkungsstufen einen sehr hohen Verstärkungsfaktor (ca. 1500) aufweist, unterliegt die Anzahl der insgesamt pro absorbiertem Photon erzeugten Elektronen im Vergleich zu Fotomultipliern nur geringen statistischen Schwankungen, so dass mit Hybriddetektoren die Anzahl der anfänglich erzeugten Photoelektronen gut bestimmt werden kann.

Wie oben dargelegt wird die Empfindlichkeit von Fotomultipliern und (Avalanche-)Fotodioden wesentlich durch die Materialeigenschaften der Fotokathode bzw. der Absorptionszone bestimmt bzw. limitiert. Um die Detektionseffizienz der Detektoren zu verbessern und / oder für bestimmte Wellenlängen zu optimieren, sind aus dem Stand der Technik unter dem Begriff der *Resonant Cavity Enhanced (RCE) Photonic Devices* photonische Komponenten bekannt, deren Wellenlängenabhängigkeit durch Einbetten der optisch aktiven Struktur in einen Resonanzmikroresonator gezielt verändert wird. Derartige photonische Komponenten profitieren von der Wellenlängenselektivität und der resonanten Erhöhung des optischen Feldes innerhalb des Mikroresonators. Die Feldverstärkung ermöglicht es einerseits, die optisch aktiven Strukturen dünner auszuführen und damit die Reaktionszeit zu verbessern, und andererseits, die Quanteneffizienz bei den Resonanzwellenlängen zu steigern und außerhalb der Resonanz liegende Wellenlängen zu unterdrücken. Eine Übersicht über *RCE Photonic Devices* findet sich beispielsweise in M. S. Ünlü und S. Strite, "Resonant cavity enhanced photonic devices", J. Appl. Phys. 78, 607 (1995).

In "High bandwidth-efficiency resonant cavity enhanced Schottky photodiodes for 800-850 nm wavelength operation", Appl. Phys. Lett. 72, 2727 (1998) beschreiben M. S. Ünlü *et al.* eine RCE-Fotodiode mit einem einstellbaren Empfindlichkeitsmaximum. Dazu wird eine Schottky-Fotodiode auf einen Bragg-Spiegel (engl. *Distributed Bragg Reflector,* DBR) aufgebracht, der zusammen mit der Schottky-Metallschicht einen Resonanzmikroresonator ausbildet. Die Resonanzwellenlänge kann über die Schichtdicken des Bragg-Spiegels im Bereich von 800 nm bis 850 nm eingestellt werden, erstreckt sich allerdings jeweils nur über ein schmales Wellenlängenband. Im Bereich der Resonanzwellenlänge erreicht diese RCE-Fotodiode eine Quanteneffizienz von ca. 50 %.

RCE-Fotodioden mit verbesserten Resonanzmikroresonator-Designs wurden beispielsweise von X. Zhang et al. in "Flat-top steep-edge photodetector with cascaded grating structure", Appl. Opt. 48 (35), 6760-6764 (2009) und von Y. Zhou et al. in "Resonant cavity enhanced (RCE) photodetectors with flat-top and steep-edge spectral response", Opt. Laser Technol. 44 (1), 285-289 (2012) beschrieben. Mit diesen Designs können Resonanzbänder mit gleichmäßiger Empfindlichkeit und steilen Kanten realisiert werden.

Eine Implementierung eines Arrays von RCE-Fotodioden mit unterschiedlicher spektraler Empfindlichkeit auf einem einzigen Chip wurde von K.-W. Lai et al. in "Selecting detection wavelength of resonant cavity-enhanced photodetectors by guided-mode resonance reflectors", Opt. Expr. 20 (4), 3572-3579 (2012) vorgeschlagen.

In S. J. Gibson et al., "Tapered InP nanowire arrays for efficient broadband high-speed single-photon detection", Nat. Nanotechnol. 14 (5), 473-479 (2019) ist ein Detektor nach dem Prinzip einer Fotodiode beschrieben, wobei pn-Übergänge durch eine Vielzahl von vertikal orientierten, *p- und n-dotierten InP-Nanodrähten ausgebildet werden, die in einer regelmäßigen zwei*dimensionalen Anordnung angeordnet sind. Bei geeigneter Wahl der Durchmesser und der Abstände der Nanodrähte bildet diese Anordnung einen fast perfekten Absorber aus, wobei die Absorption auf gewünschte Wellenlängen abgestimmt oder über einen breiten Bereich wellenlängenunabhängig ausgeführt werden kann. Konkret führen Gibson *et al.* die Nanodrähte konisch aus, so dass die Durchmesser der Nanodrähte in Längsrichtung abnehmen, wodurch ein besonders breites Absorptionsspektrum und damit eine Sensitivität von ca. 80 % über das gesamte sichtbare Spektrum erzielt wird.

Die US 2005/0045910 A1 offenbart einen Fotodetektor, dessen maximale Empfindlichkeit über eine Vorspannung spektral verändert werden kann. Dieser Fotodetektor enthält auf einem Substrat eine erste, *p*-dotierte und eine zweite, *n*-dotierte Halbleiterschicht, die einen *pn-*Übergang ausbilden. Dabei variiert die Zusammensetzung der zweiten, *n*-dotierten Halbleiterschicht senkrecht zum *pn*-Übergang dergestalt, dass die Bandlücke mit zunehmendem Abstand vom *pn*-Übergang abnimmt. Über einen elektrischen Kontakt an der zweiten, *n*-dotierten Schicht wird der *pn*-Übergang in Sperrrichtung mit einer einstellbaren Vorspannung beaufschlagt. Dabei entsteht ein Verarmungsgebiet vorwiegend in der zweiten, *n*-dotierten Schicht, wobei das Verarmungsgebiet mit zunehmender Vorspannung tiefer in die *n*-dotierte Schicht wandert. Aufgrund der mit der Tiefe abnehmenden Bandlücke der *n*-dotierten Schicht verschiebt sich mit zunehmender Vorspannung die Wellenlänge, bei der eine maximale spektrale Empfindlichkeit erreicht wird. Die US 2005/0045910 A1 offenbart weiter, dass mehrere dieser elektrisch einstellbaren Fotodioden zu einem Detektor-Array zusammengefasst und die Vorspannungen der Fotodioden unabhängig voneinander so eingestellt werden können, dass ihr Empfindlichkeitsmaximum mit dem jeweiligen spektralen Maximum des zu detektierenden Lichts übereinstimmt.

Eine neuere Klasse von Einzelphotonendetektoren nutzt als Detektionsprinzip den lichtinduzierten Zusammenbruch der Supraleitung in Nanodrähten (Nanowire-Detektoren). Hierzu werden typischerweise mäanderförmig strukturierte Nanodrähte unter ihre supraleitende kritische Temperatur abgekühlt und mit einer Gleichspannung vorgespannt, die einen Strom nahe am, aber unterhalb des kritischen Stroms des Nanodrahts verursacht. Bei der Absorption eines Photons durch den Nanodraht bricht die Supraleitung lokal zusammen, und es entsteht ein Hotspot mit einem endlichen elektrischen Widerstand. Der Vorspannungsstrom fließt an diesem Hotspot vorbei und überschreitet dabei den kritischen Strom, so dass die Supraleitung über den gesamten Querschnitt des Nanodrahts zusammenbricht und der Vorspannungsstrom einen an den Anschlüssen des Nanodrahts detektierbaren Spannungsabfall verursacht. Nachdem der Nanodraht durchgehend wieder unter die kritische Temperatur abgekühlt ist, kehrt der Draht in den supraleitenden Zustand zurück, und es kann das nächste Photon detektiert werden. Für eine Übersicht des Stands der Technik bezüglich der Nanodraht-Detektoren sei auf C. M. Natarajan et al., "Superconducting nanowire single-photon detectors: physics and applications", Supercond. Sci. Technol. 25, 063001 (2012) verwiesen.

Ähnlich wie zuvor für Fotodioden beschrieben kann die Absorption des supraleitenden Nanodrahts durch dessen Integration in einen optischen Mikroresonator oder einen photonischen Wellenleiter oder durch Hinzufügen von Nanoantennenstrukturen erhöht und damit die Sensitivität des Nanodraht-Detektors gesteigert werden.

### Aufgabe der Erfindung

Aufbauend auf den aus dem Stand der Technik bekannten Detektoren ist es die Aufgabe der Erfindung, eine Detektionsvorrichtung und ein entsprechendes Verfahren anzugeben, die eine Detektion von Licht ermöglichen, das mehrere Wellenlängenkomponenten in einem potenziell sehr breiten Wellenlängenbereich umfasst, wobei die Detektionsempfindlichkeit über den gesamten Wellenlängenbereich besonders hoch ist.

### Lösung

Diese Aufgabe wird durch die Detektionsvorrichtung gemäß dem unabhängigen Anspruch 1 gelöst. Die Ansprüche 2 bis 12 betreffen bevorzugte Ausführungsformen der Detektionsvorrichtung, während der nebengeordnete Anspruch 13 ein Lichtmikroskop mit einer Detektionsvorrichtung nach einem der Ansprüche 1 bis 12 angibt. Der nebengeordnete Anspruch 14 sowie der von diesem Anspruch abhängigen Anspruch 15 betreffen ein Verfahren zur optimierten Detektion von Licht, das mehrere Wellenlängen umfasst.

### Beschreibung der Erfindung

Ein Aspekt der Erfindung bezieht sich auf eine Detektionsvorrichtung zur Detektion von Licht, das mehrere Wellenlängenkomponenten in einem Wellenlängenbereich umfasst. Der Wellenlängenbereich kann beispielsweise durch das Emissionsspektrum eines oder mehrerer fluoreszierender Farbstoffe gegeben sein, dessen / deren Fluoreszenz mit der Detektionsvorrichtung erfasst werden soll. Der Wellenlängenbereich ist dabei aber nicht notwendigerweise durch externe Faktoren wie die Emissionsspektren eines oder mehrerer Farbstoffe bestimmt, sondern kann frei gewählt bzw. definiert werden und so beispielsweise auch nur einen Teil eines Fluoreszenzspektrums umfassen. Im Falle der Fluoreszenzdetektion sind die Wellenlängenkomponenten kontinuierlich über den Wellenlängenbereich verteilt; die Wellenlängenkomponenten können prinzipiell aber auch aus voneinander getrennten Wellenlängenbändern und / oder einzelnen Spektrallinien bestehen. Ebenso können Wellenlängenbänder oder einzelne Spektrallinien in dem Wellenlängenbereich fehlen, beispielsweise, wenn ein spektraler Bereich um die Wellenlänge einer Anregungslichtquelle mit einem Sperrfilter ausgeblendet wird.

Erfindungsgemäß umfasst die Detektionsvorrichtung ein dispersives optisches Element, das dazu ausgebildet ist, das Licht räumlich in die Wellenlängenkomponenten aufzuspalten. Dieses dispersive optische Element kann insbesondere ein Prisma, ein optisches Gitter, ein akustooptischer Deflektor oder ein akustooptisch einstellbares Filter sein. Das dispersive optische Element kann alternativ unter Verwendung eines programmierbaren Phasen- und / oder Amplitudenmodulators *(Spatial Light Modulator,* SLM) implementiert werden. Hierzu kann der Phasen-/ Amplitudenmodulator insbesondere so programmiert werden, dass er Gittermuster präsentiert.

Die Detektionsvorrichtung umfasst weiter einen Detektor mit einer Vielzahl von Detektorelementen, wobei Empfindlichkeiten der Detektorelemente innerhalb des Wellenlängenbereichs unterschiedliche Wellenlängenabhängigkeiten aufweisen. Dabei dann die Wellenlängenabhängigkeit von einem Detektorelement zum Nächsten variieren, oder der Detektor kann Gruppen von Detektorelementen mit gleicher Wellenlängenabhängigkeit umfassen, wobei sich die Wellenlängenabhängigkeit der Gruppen von Detektorelementen voneinander unterscheiden.

Dabei ist die Detektionsvorrichtung so eingerichtet, dass die räumlich aufgespaltenen Lichtkomponenten so auf den Detektor gerichtet werden, dass kürzerwellige Wellenlängenkomponenten des Lichts auf Detektorelemente fallen, deren maximale Empfindlichkeiten bei einer kleineren Wellenlänge liegen, und längerwellige Wellenlängenkomponenten auf Detektorelemente fallen, deren maximale Empfindlichkeiten bei einer größeren Wellenlänge liegen.

In bevorzugten Ausführungsformen der Detektionsvorrichtung sind die Detektorelemente als Avalanche-Fotodioden, Nanowire-Detektoren, Fotomultiplier oder Hydriddetektoren ausgebildet.

Besonders bevorzugt sind Ausführungsformen, in denen das dispersive optische Element und der die Detektorelemente umfassende Detektor starr miteinander verbunden oder in einem Bauelement bzw. einem Modul integriert sind. Dadurch werden mögliche Drifts zwischen den beiden Komponenten minimiert, und die Detektionsvorrichtung kann ggf. sehr kosteneffektiv produziert werden. Ein solches Modul kann weiter eine Steuer- und Datenverarbeitungseinheit umfassen, die den Detektor mit Versorgungsspannung versorgt, ihn ggf. mit Steuersignalen steuert und die Signale der Detektorelemente empfängt. In der Steuer- und Datenverarbeitungseinheit kann auch eine Filterung und / oder eine Kompression der Daten erfolgen (um die Datenmenge zu reduzieren). Außerdem ist in der Steuer- und Datenverarbeitungseinheit typischerweise ein Datenübertragungsprotokoll implementiert, mit dem die Daten des Detektors über eine - gegebenenfalls standardisierte - Schnittstelle (beispielsweise USB) für die Weiterverarbeitung übertragen werden.

Die Detektorelemente können einzeln auslesbar sein, so dass den detektierten Photonen oder Lichtintensitäten Wellenlängen bzw. Wellenlängenbereiche zugeordnet werden können und insofern eine spektral aufgelöste Detektion erfolgen kann. Insofern eignet sich die Detektionsvorrichtung insbesondere zur Verwendung in Spektrometern und Laserscanningmikroskopen.

Die erfindungsgemäße Detektionsvorrichtung weist allerdings auch dann Vorteile gegenüber einer entsprechenden Detektionsvorrichtung mit identischen Detektorelementen auf, wenn die Detektorelemente nicht einzeln auslesbar sind und lediglich ein Summensignal aller Detektorelemente ausgegeben wird. Eine einzelne Auslesbarkeit der Detektorelemente ist insofern ein fakultatives Merkmal der Detektionsvorrichtung. Dadurch, dass kürzerwellige Wellenlängenkomponenten des Lichts auf Detektorelemente gerichtet werden, deren maximale Empfindlichkeiten bei einer kleineren Wellenlänge liegen, und längerwellige Wellenlängenkomponenten auf Detektorelemente gerichtet werden, deren maximale Empfindlichkeiten bei einer größeren Wellenlänge liegen, kann über den gesamten Wellenlängenbereich eine optimale Sensitivität erzielt werden, die besser ist als die einer entsprechenden Anordnung mit identischen Detektorelementen, die nur in einem Teilbereich des Wellenlängenbereichs eine optimale Sensitivität aufweisen. Eine Ausführungsform mit einem gemeinsamen Signalausgang kann beispielsweise vorteilhaft sein, wenn der Detektor eine sehr große Zahl von Detektorelementen aufweist, so dass eine Ausleseelektronik für jedes Detektorelement nicht oder nur schwierig integriert werden kann und / oder die Datenmenge, die beim individuellen Auslesen der einzelnen Detektorelemente anfiele, nicht übertragen und / oder verarbeitet werden kann. Ein Beispiel für einen derartigen Detektor sind sog. *Silicon Photomultiplier* (SiPM), bei denen viele einzelne Avalanche-Fotodioden parallelgeschaltet sind.

In einer bevorzugten Ausführungsform der Detektionsvorrichtung werden die spektral unterschiedlichen Empfindlichkeiten der Detektorelemente durch Variation der Zusammensetzung oder der Dotierung einer lichtabsorbierenden Struktur oder einer die Wellenlängenabhängigkeit der Detektorelemente beeinflussenden Hilfsstruktur erzielt.

Der Begriff der lichtabsorbierenden Struktur bezieht sich dabei auf denjenigen Bereich oder diejenige Teilstruktur eines Detektors bzw. Detektorelements, in dem / in der die initiale Wandlung einfallender Photonen in ein elektrisches Signal erfolgt, insbesondere die Erzeugung primärer Ladungsträger (Fotoelektronen, Elektronen-Loch-Paare). Die lichtabsorbierende Struktur kann beispielsweise die Absorptionszone einer Fotodiode, die Fotokathode eines Fotomultipliers oder ein (z. B. mäanderförmig) ausgelegter Nanodraht eines supraleitenden Nanowire-Detektors sein. Sofern der Detektor bzw. das Detektorelement aus einer Vielzahl einzelner lichtabsorbierender Elemente besteht [beispielsweise regelmäßig angeordneter, vertikal orientierter Nanodrähte, siehe S. J. Gibson et al., "Tapered InP nanowire arrays for efficient broadband high-speed single-photon detection", Nat. Nanotechnol. 14 (5), 473-479 (2019)], so bildet die Gesamtheit dieser Einzelelemente die lichtabsorbierende Struktur.

Dagegen sind unter einer Hilfsstruktur Bereiche oder Teilstrukturen eines Detektors bzw. Detektorelements zu verstehen, die nicht unmittelbar am Detektionsprozess, d. h. an der Umwandlung eines optischen in ein elektrisches Signal beteiligt sind, diesen Prozess jedoch unterstützen oder beeinflussen. Ein Beispiel für derartige Hilfsstrukturen sind beispielsweise in RCE-Fotodioden durch ein Schichtensystem ausgebildete Bragg-Spiegel, die die eigentliche Fotodiode umgeben und einen Resonanzmikroresonator ausbilden. Ein anderes Beispiel für Hilfsstrukturen sind die in einigen Designs von Fotodioden zur Reduzierung von Leckströmen und zur Erhöhung der Durchbruchspannung eingesetzten *Guard Rings.*

Die spektrale Empfindlichkeit kann beispielsweise durch Wahl des Halbleitermaterials variiert werden. So sind beispielsweise Silizium-APDs zwischen rund 300 nm und 1100 nm empfindlich, Germanium-APDs zwischen 800 nm und 1600 nm und Indiumgalliumarsenid-(InGaAs)-APDs zwischen 900 nm und 1700 nm. Bei Halbleitermaterialien wie InGaAs kann die Bandlücke auch durch das Mischungsverhältnis der Ausgangsstoffe InAs und GaAs eingestellt und damit der Wellenlängenbereich rot- bzw. blauverschoben werden. Für bestimmte Wellenlängenbereiche optimierte einzelne Avalanche-Fotodioden werden unter anderem als *red enhanced* APDs, *green enhanced* APDs oder *blue enhanced* APDs kommerziell angeboten.

Eine besonders einfache Ausführungsform der erfindungsgemäßen Detektionsvorrichtung umfasst einen Detektor, in dem nebeneinander zwei Detektorelemente angeordnet sind, wobei das erste Detektorelement für den blau-grünen Wellenlängenbereich (*green enhanced* APD) und das zweite Detektorelement für den orange-roten Wellenlängenbereich (*red enhanced* APD) optimiert ist. Bevorzugt sind die beiden Detektorelemente auf einem gemeinsamen Träger, insbesondere einer Leiterplatte montiert, über die sie auch elektrisch kontaktiert sind. Besonders bevorzugt ist es, die Detektorelemente auf einem gemeinsamen Substrat oder *Die* zu integrieren und bereits im (gemeinsamen) Herstellungsprozess hinsichtlich ihrer jeweiligen Wellenlängenempfindlichkeit durch geeignete Variation der Zusammensetzung oder Dotierung zu optimieren. In der Detektionsvorrichtung wird der Detektor relativ zu dem dispersiven optischen Element so angeordnet, dass kürzerwellige Wellenlängenkomponenten (400 nm bis 600 nm) des räumlich aufgespaltenen Lichts auf das erste Detektorelement fallen, während längerwellige Wellenlängenkomponenten (600 nm bis 800 nm) des räumlich aufgespaltenen Lichts auf das zweite Detektorelement fallen. Die beschriebene Ausführungsform lässt sich entsprechend auf Detektoren mit drei oder mehr Detektorelementen mit unterschiedlich optimierten Wellenlängenbereichen erweitern.

In einer anderen Ausführungsform umfasst die Detektionsvorrichtung einen Detektor mit einer Vielzahl von Detektorelementen oder Gruppen von Detektorelementen, deren spektrale Empfindlichkeit durch Variation einer angelegten Steuerspannung moduliert werden kann. Wie dem Fachmann aus dem Stand der Technik bekannt ist, kann eine solche Einstellbarkeit der spektralen Empfindlichkeit mit speziellen Fotodioden-Designs realisiert werden. Dazu weist die Absorptionszone der Fotodiode einen senkrecht zur *pn*-Übergangsschicht verlaufenden Konzentrationsgradienten einer Dotierung auf, so dass sich die elektronische Bandlücke mit zunehmendem Abstand von der *pn*-Grenzfläche verringert. Dann kann abhängig von der extern angelegten Steuerspannung die Raumladungszone und damit der Bereich, in dem einfallende Photonen absorbiert und detektiert werden, in die Absorptionszone hinein verschoben werden. Dabei ändert sich aufgrund der mit dem Dotierungsgradienten einhergehenden Änderung der elektronischen Bandlücke die spektrale Empfindlichkeit. Eine Ausführungsform der Detektionsvorrichtung unter Verwendung in dieser Weise elektrisch durchstimmbarer Detektorelemente wird durch Anlegen verschiedener Steuerspannungen (mittels einer Steuereinheit) an aufeinanderfolgenden Detektorelementen realisiert. Dies ermöglicht nicht nur eine Einstellung der spektralen Empfindlichkeit der Detektorelemente bei der Herstellung, sondern erlaubt auch eine dynamische Anpassung im Betrieb.

In einer weiteren Ausführungsform umfasst die Detektionsvorrichtung einen Detektor mit einer Vielzahl von Detektorelementen spektral unterschiedlicher Empfindlichkeit, wobei sich die Detektorelemente oder Gruppen von Detektorelementen in einer Abmessung, einer Dicke oder einer charakteristischen Größe einer lichtabsorbierenden Struktur oder einer die Wellenlängenabhängigkeit der Detektorelemente beeinflussenden Hilfsstruktur voneinander unterscheiden. Unter einer charakteristischen Größe der lichtabsorbierenden Struktur ist hier beispielsweise die Periode einer regelmäßigen Anordnung einer Vielzahl von Einzelelementen zu verstehen, die zusammen die lichtabsorbierende Struktur ausbilden (z. B. vertikal orientierte Nanodrähte). Charakteristische Größen von Hilfsstrukturen sind beispielsweise die Schichtfolge und die Periode eines einen Bragg-Spiegel ausbildenden dielektrischen Schichtsystems in einer RCE-Fotodiode.

In einer bevorzugten Ausführungsform der Detektionsvorrichtung sind die Detektorelemente entlang eines Pfads so angeordnet, dass eine Wellenlänge, an der die Empfindlichkeit der Detektorelemente einen Maximalwert annimmt, entlang des Pfads monoton zunimmt. (Eine monotone Abnahme dieser Größe ist aufgrund der Umkehrbarkeit des Pfads implizit eingeschlossen.) Dieser Pfad verläuft typischerweise geradlinig, da das dispersive optische Element das einfallende Licht in Teilstrahlen mit unterschiedlichen Austrittswinkeln, aber innerhalb einer Ebene aufspaltet, so dass die Wellenlängenkomponenten in geradliniger Abfolge auf den Detektor treffen. Speziellere Ausführungsformen der Detektionsvorrichtung können allerdings auch andere Pfadgeometrien, beispielsweise kreis- oder mäanderförmige Pfade vorsehen; auch kann der Pfad unterbrochen und aus mehreren, nicht zusammenhängenden Teilpfaden zusammengesetzt sein, insbesondere in Form aufeinanderfolgender Zeilen. Dazu kann das einfallende Licht gegebenenfalls vorab mit einem (dichroitischen) Strahlteiler in Teilstrahlen aufgeteilt werden, die mit separaten dispersiven optischen Elementen auf Detektorelemente gelenkt werden, die in unterschiedlichen Teilpfaden des Pfads angeordnet sind.

Die Variation der spektralen Lage des Empfindlichkeitsmaximums entlang des Pfads kann insbesondere dadurch erzielt werden, dass eine Abmessung, eine Dicke, eine charakteristische Größe der lichtabsorbierenden Struktur oder der die Wellenlängenabhängigkeit beeinflussenden Hilfsstruktur oder eine angelegte Steuerspannung entlang des Pfads monoton zu- oder abnimmt. Dabei muss die ansteigende Größe nicht von jedem Detektorelement zum nächsten zunehmen, sondern es können auch mehrere identische Detektorelemente nacheinander angeordnet sein, d. h. die Zunahme der Größe in Gruppen von Detektorelementen erfolgen.

Grundsätzlich können die Wellenlängenkomponenten des Lichts nach der räumlichen Aufspaltung durch das dispersive optische Element direkt auf den Detektor gelenkt werden. Es können optional aber auch weitere optische Elemente zwischen dem dispersiven optischen Element und dem Detektor angeordnet sein, beispielsweise Filter oder Linsen, mit denen der Lichtstrahl auf den Detektor fokussiert wird.

Abhängig von der Bauart des Detektors kann es schwierig oder sogar unmöglich sein, die Detektorelemente unmittelbar nebeneinander und mit hohem Füllfaktor anzuordnen. Dies gilt beispielsweise für Fotomultiplier-Arrays, die große Detektorelemente und signifikante Lücken zwischen den Detektorelementen aufweisen. In diesen Fällen bietet sich eine Ausführungsform der Detektionsvorrichtung an, bei der die räumlich aufgespaltenen Wellenlängenkomponenten nicht direkt, sondern über Lichtwellenleiter auf die Detektorelemente gelenkt werden. Die Eintrittsflächen der Lichtwellenleiter werden dabei bevorzugt lückenfrei und linear angeordnet. Bezüglich der Anordnung der Detektorelemente bestehen in dieser Ausführungsform dann praktisch keine Anforderungen, da die Lichtwellenleiter ausgangsseitig sehr flexibel zu den Detektorelementen geführt und an diese gekoppelt werden können. Die Detektorelemente können daher beabstandet sein und / oder in beliebiger Anordnung vorliegen.

Je nach Form, Anordnung und Abstand der einzelnen Detektorelemente bzw. der Eintrittsflächen der Lichtwellenleiter bestehen zwischen den Detektorelementen Bereiche, in denen auftreffendes Licht von keinem Detektorelement erfasst wird. Um Verluste aufgrund eines begrenzten Füllfaktors zu reduzieren, können vor den Detektorelementen oder den Eintrittsflächen der Lichtwellenleiter Mikrolinsen angeordnet sein, mit denen die Wellenlängenkomponenten abschnittsweise auf die Detektorelemente bzw. Eintrittsflächen der Lichtwellenleiter gebündelt werden.

Ein zweiter Aspekt der Erfindung betrifft ein Lichtmikroskop, insbesondere ein Laserscanning-Fluoreszenzmikroskop, mit einer zuvor beschriebenen Detektionsvorrichtung. Ein solches Mikroskop umfasst in einer typischen Ausführungsform ein oder mehrere Laserlichtquellen, die ggf. mit Strahlteilern vereint und mit einem (Haupt-)Strahlteiler in den Hauptstrahlengang des Mikroskops eingespiegelt werden. Als Hauptstrahlengang wird hier derjenige Teil der Strahlengänge im Mikroskop verstanden, in dem alle Anregungslichtstrahlen und, in entgegengesetzter Richtung, alle Detektionslichtstrahlen gemeinsam verlaufen. Das Lichtmikroskop umfasst weiter eine Abbildungsoptik, die zumindest eine Scan- und eine Tubuslinse umfasst und die die Anregungslaserstrahlen in die rückwärtige Apertur eines Objektivs abbildet. Im Strahlengang ist zudem ein Strahlscanner angeordnet, mit dem durch punktweises Abrastern der Probe mit dem fokussierten Anregungslicht ein Rasterbild aufgenommen werden kann. Die Scanner sind dabei typischerweise als Galvanometerspiegel ausgeführt, können aber beispielsweise auch als rotierende Polygonspiegel oder als akustooptische oder elektrooptische Deflektoren ausgeführt sein. Alternativ kann statt der Anregungslichtstrahlen auch die Probe relativ zum Objektiv bewegt werden.

Zur Blockung von Streulicht und zur Unterdrückung von Fluoreszenz aus außerfokalen Bereichen umfasst das Mikroskop im Detektionsstrahlengang insbesondere einen Bandpassfilter sowie einen im Fokus eines Teleskops angeordneten Raumfilter in Form einer konfokalen Lochblende, durch die das Fluoreszenzlicht fokussiert wird. Hinter dem Teleskop ist eine erfindungsgemäße Detektionsvorrichtung angeordnet.

Ein weiterer Aspekt der Erfindung betrifft ein Verfahren zur Detektion von Licht, das mehrere Wellenlängenkomponenten in einem Wellenlängenbereich umfasst. Hierzu wird das einfallende Licht mit einem dispersiven optischen Element räumlich in die Wellenlängenkomponenten aufgespalten und auf einen Detektor gerichtet, der eine Vielzahl von Detektorelementen aufweist.

Erfindungsgemäß wird hierzu ein Detektor mit einer Vielzahl von Detektorelementen verwendet, wobei die Empfindlichkeiten der Detektorelemente oder von Gruppen der Detektorelemente innerhalb des Wellenlängenbereichs verschiedene Wellenlängenabhängigkeiten aufweisen.

Kürzerwellige Wellenlängenkomponenten des Lichts fallen dabei auf Detektorelemente, deren maximale Empfindlichkeiten bei einer kleineren Wellenlänge liegen, und längerwellige Wellenlängenkomponenten fallen auf Detektorelemente, deren maximale Empfindlichkeiten bei einer größeren Wellenlänge liegen.

Eine Ausführungsform des Verfahrens ist dadurch gekennzeichnet, dass die Detektorelemente einzeln ausgelesen werden.

Eine andere Ausführungsform ist dadurch gekennzeichnet, dass die Detektorelemente entlang eines Pfads angeordnet werden und eine Wellenlänge, an der die Empfindlichkeit der Detektorelemente einen Maximalwert annimmt, entlang des Pfads monoton zu- oder abnimmt.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen. Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen.

Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### Kurzbeschreibung der Figuren

- **Fig. 1**: zeigt eine erfindungsgemäße Detektionsvorrichtung.
- **Fig. 2**: zeigt eine in einem Modul integrierte Ausführungsform der Detektionsvorrichtung.
- **Fig. 3**: zeigt eine erfindungsgemäße Detektionsvorrichtung mit Lichtwellenleitern.
- **Fig. 4**: zeigt einen *Nanowire*-Detektor zur Verwendung in der erfindungsgemäßen Detektionsvorrichtung.
- **Fig. 5**: zeigt ein Lichtmikroskop mit einer erfindungsgemäßen Detektionsvorrichtung.

### Beschreibung der Figuren

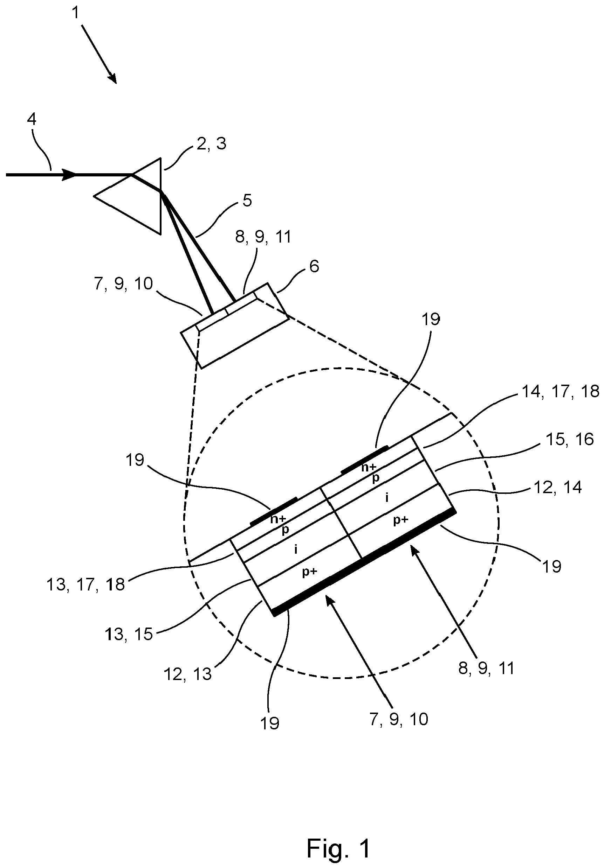

**Fig. 1** zeigt eine erfindungsgemäße Detektionsvorrichtung 1 mit einem als Prisma 2 ausgebildeten dispersiven optischen Element 3, das den einfallenden Lichtstrahl 4 räumlich aufspaltet. Der aus dem Prisma 2 austretende aufgespaltene Lichtstrahl 5 fällt auf den Detektor 6, wobei die stärker abgelenkten blauen Spektralanteile auf das linke Detektorelement 7 und die weniger stark abgelenkten roten Spektralanteile auf das rechte Detektorelement 8 fallen. Die Detektorelemente 7, 8 sind als Avalanche-Fotodioden (APDs) 9 ausgebildet, deren Aufbau als Si-APD 10 bzw. InGaAs-APD 11 in dem gestrichelten Kreisausschnitt vereinfacht dargestellt ist. Beide Detektorelemente 7, 8 weisen eine für APDs übliche Schichtenfolge mit einem *p⁺-i-p-n*⁺-Dotierungsprofil auf, sind allerdings aus verschiedenen Halbleitermaterialien aufgebaut und weisen daher voneinander verschiedene spektrale Empfindlichkeiten auf. Auf einem *p*⁺-dotierten Substrat 12 aus Silizium (Si) 13 bzw. Indiumphosphid (InP) 14 ist eine als Absorptionszone 15 fungierende intrinsische Schicht aus Silizium (Si) 13 bzw. Indiumgalliumarsenid (InGaAs) 16 aufgebracht, in der einfallende Photonen absorbiert und primäre Ladungsträger erzeugt werden. Die auf die Absorptionsschicht folgende, hochdotierte p-Schicht bildet mit der abschließenden *n*⁺-Schicht eine Raumladungszone 17 mit hoher elektrischer Feldstärke, in der die Primärladungsträger beschleunigt und durch Stoßionisation verstärkt werden; dieser Bereich ist die Multiplikationszone 18 der jeweiligen APD. Das Substrat und die abschließende *n*⁺-Schicht sind mit Metallkontakten 19 für die externe Kontaktierung versehen.

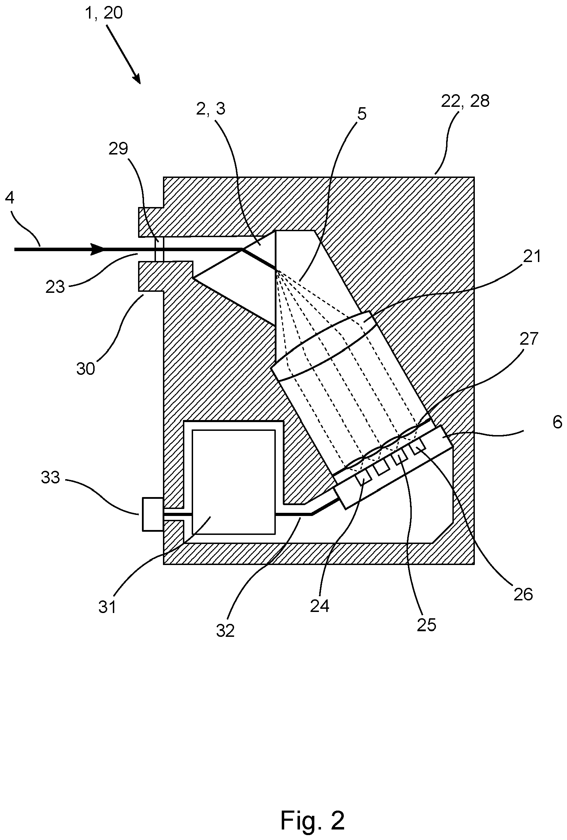

In **Fig. 2** ist eine Ausführungsform der Detektionsvorrichtung 1 gezeigt, bei der die Komponenten der Detektionsvorrichtung 1 in einem Modul 20 integriert sind. Der einfallende Lichtstrahl 4 wird durch das dispersive optische Element 3, das wiederum als Prisma 2 ausgeführt ist, fächerförmig in seine Wellenlängenkomponenten aufgespalten. Der aufgespaltene Lichtstrahl 5 wird durch die Linse 21 auf eine Linie fokussiert, in der die Wellenlängenkomponenten nebeneinander angeordnet sind; die gestrichelt dargestellten Wellenlängenkomponenten des aufgefächerten Lichtstrahls verlaufen hinter der Linse 21 parallel.

Das Prisma 2, die Linse 21 und der Detektor 6 sind auf einem gemeinsamen Träger 22 montiert und so zueinander und zu der Eintrittsöffnung 23 ausgerichtet, dass der einfallende Lichtstrahl 4 für eine definierte Eintrittsposition und Eintrittsrichtung so aufgespalten und fokussiert wird, dass er auf den Bereich des Detektors 6 trifft, in dem die Detektorelemente 24, 25, 26 angeordnet sind, und dass blaue Spektralanteile des aufgespaltenen Lichts auf blauempfindliche Detektorelemente 24 fallen, grüne Spektralanteile des aufgespaltenen Lichts auf grünempfindliche Detektorelemente 25 und rote Spektralanteile des aufgespaltenen Lichts auf rotempfindliche Detektorelemente 26.

In der gezeigten Ausführungsform ist vor dem Detektor 6 zusätzlich ein Array aus Mikrolinsen 27 angeordnet, um das Licht auf die Detektorelemente 24, 25, 26 zu bündeln und so Lichtverluste aufgrund von Lücken zwischen den Detektorelementen 24, 25, 26 zu vermeiden.

Der Träger 22 dient gleichzeitig als Korpus 28, der alle Komponenten der Detektionsvorrichtung 1 umschließt und gegen Umwelteinflüsse wie Staub und / oder Feuchtigkeit zumindest weitgehend abschirmt. Dazu ist die Eintrittsöffnung 23 zusätzlich mit einem Fenster 29 verschlossen. Der Korpus 28 kann einen - ggf. standardisierten oder genormten - Anschluss 30 aufweisen, über den die Detektionsvorrichtung 1 mit der Quelle des zu detektierenden Lichts verbunden werden kann. Der Anschluss 30 kann beispielsweise ein C-Mount-Anschluss sein, mit dem die Detektionsvorrichtung 1 mit einem optischen Port eines Lichtmikroskops verbunden werden kann. Der Anschluss 30 kann auch ein Faserkollimator zum Anschluss eines Lichtwellenleiters sein.

Das Modul 20 kann weiter eine Steuer- und Auswerteeinheit 31 umfassen, die mit dem Detektor 6 über Versorgungs- und Datenleitungen 32 verbunden ist und an den Detektor 6 Versorgungsspannungen und Steuersignale überträgt sowie Ausgangsignale der Detektorelemente 24, 25, 26 in unverarbeiteter oder vorverarbeiteter Form empfängt. Die Steuer- und Auswerteeinheit 31 kann weiter eine Datenverarbeitungseinheit umfassen, die die empfangen Roh- oder vorverarbeiteten Daten (weiter-) verarbeitet und über einen Datenport 33 bereitstellt. Die Verarbeitung kann insbesondere eine Filterung der Daten, eine Kennzeichnung einzelner Detektionsereignisse mit einem Zeitstempel und / oder eine Formatierung und Ausgabe der Daten gemäß eines Übertragungsprotokolls umfassen.

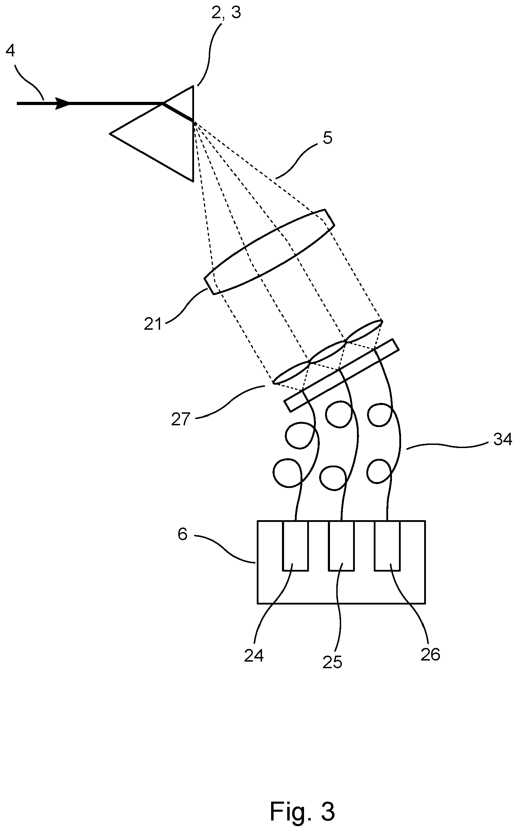

**Fig. 3** zeigt eine der in Fig. 1 dargestellten ähnliche Detektionsvorrichtung, die ebenfalls ein als Prisma 2 ausgebildetes dispersives optisches Element 3 und eine Linse 21 umfasst, die den einfallenden Lichtstrahl 4 räumlich aufspalten und fokussieren. Abweichend von Fig. 1 fällt der aufgespaltene Lichtstrahl 5 hier nicht direkt auf den Detektor 6, sondern wird mit einem Array von Mikrolinsen 27 in Lichtwellenleiter 34 fokussiert, so dass die Lichtwellenleiter 34 aufeinander folgende Wellenlängenbänder transportieren. Ausgangsseitig sind die Lichtwellenleiter 34 an die Detektorelemente 24, 25, 26 des Detektors 6 gekoppelt. In dieser Anordnung kann der Detektor 6 räumlich getrennt von den anderen Komponenten der Detektionsvorrichtung platziert werden.

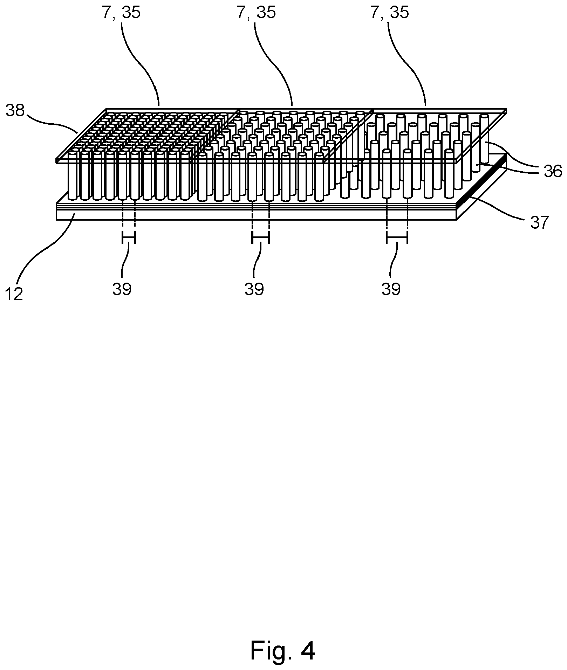

In **Fig. 4** ist ein *Nanowire*-Detektor zur Verwendung in der erfindungsgemäßen Detektionsvorrichtung gezeigt. Der Detektor baut auf dem aus dem Stand der Technik [S. J. Gibson et al., "Tapered InP nanowire arrays for efficient broadband high-speed single-photon detection", Nat. Nanotechnol. 14 (5), 473-479 (2019)] bekannten *Nanowire*-Detektor auf, wandelt diesen jedoch für die Verwendung in der erfindungsgemäßen Detektionsvorrichtung ab.

Auf einem Substrat 12 sind in Abschnitten 35 zweidimensionale Raster von stehenden Nanodrähten 36 angeordnet, die jeweils einen *pn*-Übergang aufweisen und mit dem Halbleiter-Schichtensystem 37 und dem Substrat 12 einzelne Fotodioden ausbilden. Die Nanodrähte 36 sind gemeinsam über das Substrat 12 sowie abschnittsweise über eine unterbrochene Indium-Zinnoxid-Schicht (ITO) 38 kontaktiert. Jeder Abschnitt 35 bildet damit ein separates Detektorelement 7 aus.

Abweichend vom Stand der Technik haben die Nanodrähte 36 in der gezeigten Ausführungsform keine konische, sondern eine zylindrische Form, so dass in Abhängigkeit vom Abstand 39 der Nanodrähte 36 eine ausgeprägte Wellenlängenabhängigkeit der Detektionsempfindlichkeit besteht. Dieser Abstand 39 vergrößert sich von einem Detektorelement 7 zum nächsten, so dass sich in gleicher Folge die Sensitivität zu größeren Wellenlängen hin verschiebt.

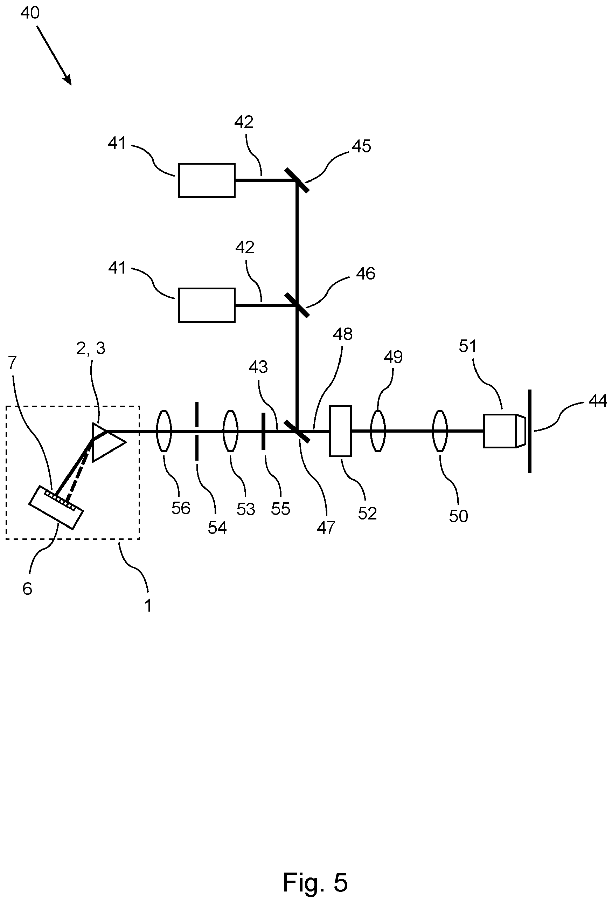

**Fig. 5** zeigt ein Lichtmikroskop 40 mit einer erfindungsgemäßen Detektionsvorrichtung 1. Das Lichtmikroskop 40 umfasst als Lichtquellen zwei Laser 41, die Anregungslicht 42 zur Anregung einer Fluoreszenz 43 in der Probe 44 bereitstellen. Die Laserstrahlen werden mit einem Spiegel 45 und einem Strahlteiler 46 vereint und über einen Hauptstrahlteiler 47 in den Hauptstrahlengang 48 eingekoppelt. Mittels einer Scanlinse 49 und einer Tubuslinse 50 werden die Laserstrahlen in die rückwärtige Apertur des Objektivs 51 abgebildet, das die Laserstrahlen in die Probe 44 fokussiert. Die Lage des Fokus in der Probe 44 kann mit einem im Hauptstrahlengang 48 angeordneten Scanner 52 verlagert werden, um durch Abrastern der Probe 44 mit dem Laserlicht ein Rasterbild aufzunehmen. In der Probe 44 generiertes und mit dem Objektiv 51 gesammeltes Fluoreszenzlicht 43 propagiert im Hauptstrahlengang 48 in den Laserstrahlen entgegengesetzter Richtung, wird an dem Hauptstrahlteiler 47 vom Laserlicht abgetrennt und mit einer Linse 53 durch eine Lochblende 54 fokussiert. Ein Filter 55 blockt zusätzlich störendes Streulicht. Das durch die Lochblende 54 hindurchgetretene Fluoreszenzlicht wird mit einer weiteren Linse 56 kollimiert und mit einem dispersiven optischen Element 3, hier einem Prisma 2 spektral aufgespalten und fällt in Abhängigkeit von der Wellenlänge auf verschiedene Detektorelemente 7 des Detektors 6.

### Bezugszeichenliste

- 1: Detektionsvorrichtung
- 2: Prisma
- 3: dispersives optisches Element
- 4: einfallender Lichtstrahl
- 5: aufgespaltener Lichtstrahl
- 6: Detektor
- 7: Detektorelement
- 8: Detektorelement
- 9: Avalanche-Fotodiode (APD)
- 10: Si-APD
- 11: InGaAs-APD
- 12: Substrat
- 13: Silizium (Si)
- 14: Indiumphosphid (InP)
- 15: Absorptionszone
- 16: Indiumgalliumarsenid (InGaAs)
- 17: Raumladungszone
- 18: Multiplikationszone
- 19: Metallkontakt
- 20: Modul
- 21: Linse
- 22: Träger
- 23: Eintrittsöffnung
- 24: Detektorelement, blauempfindlich
- 25: Detektorelement, grünempfindlich
- 26: Detektorelement, rotempfindlich
- 27: Mikrolinsen
- 28: Korpus
- 29: Fenster
- 30: Anschluss
- 31: Steuer- und Auswerteeinheit
- 32: Versorgungs- und Datenleitungen
- 33: Datenport
- 34: Lichtwellenleiter
- 35: Abschnitt
- 36: Nanodraht
- 37: Halbleiter-Schichtensystem
- 38: Indium-Zinnoxid-Schicht (ITO)
- 39: Abstand
- 40: Lichtmikroskop
- 41: Laser
- 42: Anregungslicht
- 43: Fluoreszenz
- 44: Probe
- 45: Spiegel
- 46: Strahlteiler
- 47: Hauptstrahlteiler
- 48: Hauptstrahlengang
- 49: Scanlinse
- 50: Tubuslinse
- 51: Objektiv
- 52: Scanner
- 53: Linse
- 54: Lochblende
- 55: Filter
- 56: Linse

## Patentansprüche

1. Detektionsvorrichtung (1) zur Detektion von Licht mit mehreren Wellenlängenkomponenten in einem Wellenlängenbereich,
- wobei die Detektionsvorrichtung (1) ein dispersives optisches Element (3) umfasst, das dazu ausgebildet ist, das Licht räumlich in die Wellenlängenkomponenten aufzuspalten,
- wobei die Detektionsvorrichtung (1) einen Detektor (6) mit einer Vielzahl von Detektorelementen (7, 8) umfasst,
- wobei die Detektionsvorrichtung (1) dazu ausgebildet ist, die räumlich aufgespaltenen Wellenlängenkomponenten auf die Detektorelemente (7, 8) des Detektors (6) zu richten,
**dadurch gekennzeichnet, dass** Empfindlichkeiten der Detektorelemente (7, 8) innerhalb des Wellenlängenbereichs verschiedene Wellenlängenabhängigkeiten aufweisen und die Detektionsvorrichtung (1) so ausgebildet ist, dass kürzerwellige Wellenlängenkomponenten des Lichts auf Detektorelemente (7) fallen, deren maximale Empfindlichkeiten bei einer kleineren Wellenlänge liegen, und längerwellige Wellenlängenkomponenten auf Detektorelemente (8) fallen, deren maximale Empfindlichkeiten bei einer größeren Wellenlänge liegen.

2. Detektionsvorrichtung (1) nach Anspruch 1, **dadurch gekennzeichnet, dass** das dispersive optische Element (3) als Prisma (2), optisches Gitter, akustooptischer Deflektor, akustooptisch einstellbares Filter oder als programmierbarer Phasen- und / oder Amplitudenmodulator ausgebildet ist.

3. Detektionsvorrichtung (1) nach Anspruch 1 oder 2, **dadurch gekennzeichnet, dass** die Detektorelemente (7, 8) als Avalanche-Fotodioden (9), Nanowire-Detektoren, Fotomultiplier oder Hydriddetektoren ausgebildet sind.

4. Detektionsvorrichtung (1) nach einem der Ansprüche 1 bis 3, **dadurch gekennzeichnet, dass** zwischen dem dispersiven optischen Element (3) und dem Detektor (6) weitere optische Elemente, insbesondere eine Linse (21), angeordnet ist.

5. Detektionsvorrichtung (1) nach einem der Ansprüche 1 bis 4, **dadurch gekennzeichnet, dass** das dispersive optische Element (3) und der die Detektorelemente (7, 8) umfassende Detektor (6) starr miteinander verbunden oder in einem Modul (20) integriert sind.

6. Detektionsvorrichtung (1) nach einem der Ansprüche 1 bis 5, **dadurch gekennzeichnet, dass** die Detektorelemente (7, 8) einzeln auslesbar sind.

7. Detektionsvorrichtung (1) nach einem der Ansprüche 1 bis 6, **dadurch gekennzeichnet, dass** sich die Detektorelemente (7, 8) oder Gruppen von Detektorelementen (7, 8) des Detektors (6) in einer Zusammensetzung oder einer Dotierung einer lichtabsorbierenden Struktur oder einer die Wellenlängenabhängigkeit der Detektorelemente (7, 8) beeinflussenden Hilfsstruktur voneinander unterscheiden.

8. Detektionsvorrichtung (1) nach einem der Ansprüche 1 bis 6, **dadurch gekennzeichnet, dass** die Detektionsvorrichtung (1) eine Steuereinheit umfasst, die dazu ausgebildet ist, die Detektorelemente (7, 8) oder Gruppen von Detektorelementen (7, 8) des Detektors (6) mit verschiedenen, die Wellenlängenabhängigkeit der Detektorelemente (7, 8) beeinflussenden Steuerspannungen zu beaufschlagen.

9. Detektionsvorrichtung (1) nach einem der Ansprüche 1 bis 6, **dadurch gekennzeichnet, dass** sich die Detektorelemente (7, 8) oder Gruppen von Detektorelementen (7, 8) des Detektors (6) in einer Abmessung, einer Dicke oder einer charakteristischen Größe einer lichtabsorbierenden Struktur oder einer die Wellenlängenabhängigkeit der Detektorelemente (7, 8) beeinflussenden Hilfsstruktur voneinander unterscheiden.

10. Detektionsvorrichtung (1) nach einem der Ansprüche 1 bis 9, **dadurch gekennzeichnet, dass** die Detektorelemente (7, 8) entlang eines Pfads angeordnet sind und eine Wellenlänge, an der die Empfindlichkeit der Detektorelemente (7, 8) einen Maximalwert annimmt, entlang des Pfads monoton zunimmt, insbesondere wobei die Abmessung, die Dicke oder die charakteristische Größe der lichtabsorbierenden Struktur, der die Wellenlängenabhängigkeit beeinflussenden Hilfsstruktur oder die angelegte Steuerspannung entlang des Pfads monoton zu- oder abnimmt.

11. Detektionsvorrichtung (1) nach einem der Ansprüche 1 bis 10, **dadurch gekennzeichnet, dass** die Detektionsvorrichtung (1) Lichtwellenleiter (34) umfasst, die die räumlich aufgespaltenen Wellenlängenkomponenten zu den Detektorelementen (7, 8) führen.

12. Detektionsvorrichtung (1) nach einem der Ansprüche 1 bis 11, **dadurch gekennzeichnet, dass** vor den Detektorelementen (7, 8) und / oder vor den Lichtwellenleitern (34) Mikrolinsen (27) angeordnet sind.

13. Lichtmikroskop (40) mit einer Detektionsvorrichtung (1) nach einem der Ansprüche 1 bis 12.

14. Verfahren zur Detektion von Licht, das mehrere Wellenlängenkomponenten in einem Wellenlängenbereich umfasst,
- wobei das Licht mit einem dispersiven optischen Element (3) räumlich in die Wellenlängenkomponenten aufgespalten wird;
- wobei das räumlich aufgespaltene Licht mit einem eine Vielzahl von Detektorelementen (7, 8) aufweisenden Detektor (6) detektiert wird,
**dadurch gekennzeichnet, dass** Empfindlichkeiten der Detektorelemente (7, 8) oder von Gruppen der Detektorelemente (7, 8) innerhalb des Wellenlängenbereichs verschiedene Wellenlängenabhängigkeiten aufweisen, wobei kürzerwellige Wellenlängenkomponenten des Lichts auf Detektorelemente (7) fallen, deren maximale Empfindlichkeiten bei einer kleineren Wellenlänge liegen, und längerwellige Wellenlängenkomponenten auf Detektorelemente (8) fallen, deren maximale Empfindlichkeiten bei einer größeren Wellenlänge liegen, insbesondere wobei die Detektorelemente (7, 8) einzeln ausgelesen werden.

15. Verfahren nach Anspruch 14, **dadurch gekennzeichnet, dass** die Detektorelemente (7, 8) entlang eines Pfads angeordnet werden und eine Wellenlänge, an der die Empfindlichkeit der Detektorelemente (7, 8) einen Maximalwert annimmt, entlang des Pfads monoton zu- oder abnimmt.
